Europäisches Patentamt

European Patent Office

Office européen des brevets

(19)

(11) Publication number: **0 140 516**
**B1**

(12) **EUROPEAN PATENT SPECIFICATION**

(45) Date of publication of patent specification: **07.01.88**

(51) Int. Cl.⁴: **H 02 G 3/06, B 21 D 39/04**

(21) Application number: **84305706.8**

(22) Date of filing: **22.08.84**

(54) **The manufacture of end fittings for flexible conduits.**

(30) Priority: **24.08.83 GB 8322719**

(43) Date of publication of application:
**08.05.85 Bulletin 85/19**

(45) Publication of the grant of the patent:
**07.01.88 Bulletin 88/01**

(84) Designated Contracting States:
**AT BE CH DE FR IT LI LU NL SE**

(56) References cited:
**FR-A-2 253 977**
**FR-A-2 335 777**
**GB-A- 718 261**
**GB-A-1 345 737**
**US-A-2 323 912**
**US-A-2 687 904**
**US-A-3 393 267**

(73) Proprietor: **Adaptaflex Limited**
**Unit 10 Station Road**
**Coleshill Birmingham B46 1HT (GB)**

(72) Inventor: **Poulton, Adrian Roger**
**39 Temple Road Dorridge**
**Solihull West Midlands B93 8LE (GB)**

(74) Representative: **Russell, Paul Sidney et al**
**Barker, Brettell & Duncan 138 Hagley Road**
**Edgbaston**
**Birmingham B16 9PW (GB)**

Courier Press, Leamington Spa, England.

## Description

This invention is concerned with improvements in or relating to the manufacture of end fittings for flexible conduits, such as the well known plastics coated, helically wound, metallic conduits used commonly to house electrical wires and cables.

The invention relates to a method of manufacturing an end fitting comprising a tubular connecting member comprising an externally screw-threaded outer end portion arranged to be screwed into an end portion of a flexible conduit, and a tubular mounting member comprising an outer end portion whereby the fitting can be secured to a support, there being associated with said connecting member tubular coupling means whereby said mounting member is held captive relative to said connecting member in such a manner as to permit relative rotation of said mounting member relative to said connecting member and said coupling means.

Such a construction of end fitting is described in GB—A—1 345 737. The fitting comprises three basic coaxially arranged tubular components: a metal connecting member comprising a screw-threaded end portion arranged to be screwed into an end portion of a conduit, a metal mounting member comprising a screw-threaded end portion arranged to be screwed into a threaded receiving aperture in a conduit box or other support, and a plastics sealing collar which surrounds (at a distance) part at least of the screw-threaded portion of the connecting member in order to seal against an outer surface of a conduit mounted on the connecting member. The connecting member extends right through both the mounting member and the collar, the two being located on the connecting member between an out-turned end of the connecting member (remote from its threaded end portion) and a ring of circumferentially spaced external projections of the connecting member positioned between the out-turned end and the threaded end portion. The projections serve also to lock the collar against rotation on the connecting member, the projections being interengaged with internal projections of the collar. This allows the collar to be used as a hand-grip for screwing the connecting member into a conduit, whereas the mounting member is freely rotatable on the connecting member to enable the fitting to be connected up to a conduit box without rotation of the conduit.

It is well known in the art for relatively rotatable inner and outer coaxial components of an end fitting to be expanded/contracted to achieve the coupling of the two together. However, the processes employed have customarily involved spinning the components whilst outwards/inwards radial roller pressure has been applied to achieve the required deformation.

It is an object of the present invention to provide an improved method of manufacturing an end fitting.

The invention is characterised in that it comprises introducing in a contracted condition one of said coupling means and an inner end portion of said mounting member into the other of said coupling means and said mounting member and forcing a mandrel through the radially inner component of the assembly to cause radial expansion thereof from the contracted condition to a condition in which said mounting member is held captive.

By use of an expansion mandrel, as now proposed, it is not necessary to spin the components, which saves time, but even more importantly it enables greater accuracy to be achieved, we believe, under production conditions; the circularity and final dimensions of the expanded component can be virtually guaranteed by the mandrel. Furthermore, it is necessary where a spinning technique is to be employed for the portions of the components which are to be deformed to be relatively thin walled, whereas in use of an expansion mandrel, as now proposed, substantially greater wall thicknesses can in practice be accommodated. These factors combine to enable an end fitting to be produced which is manufactured to close tolerances, provides a strong coupling, and can be expected to have a long working life even under arduous conditions. A more efficient and generally improved method of manufacture is provided.

As is illustrated by the detailed descriptions of two embodiments hereinafter, the coupling means may be provided by a coupling portion of a single component providing also the connecting member, or alternatively the coupling means may be provided by a separate component, for example a collar non-rotatably secured to the connecting member.

Preferably, in performance of the invention as set out in the last preceding paragraph but two, the radial expansion by the mandrel results in a flange of the radially inner component becoming positioned behind a shoulder of the radially outer component to prevent withdrawal of the inner component. The arrangement may with advantage be such that after the expansion by the mandrel a peripheral edge of the flange is arranged to make substantially line contact with the shoulder.

In manufacturing a preferred construction of fitting, the coupling means is expanded within the mounting member, and most preferably within an inner end portion of the mounting member. A disadvantage arises from the arrangement of fitting described in GB—A—1 345 737, hereinbefore referred to, in that the connection member extends right through the mounting member. Upon introduction of a plastics guard bush into that portion of the connecting member within an outer end portion of the mounting member, as is commonly required for the protection of cables leaving the fitting through the mounting member, the effective bore of the fitting becomes still further reduced, which reduces the amount of cable which can be passed through the fitting. By arranging that the coupling means be secured within an inner end portion of the mounting member, the bore of the fitting at the outer end portion of the mounting member can be maximised for a given outside diameter (e.g. thread diameter) of the fitting at that point.

Preferably, where the coupling means is expanded within the mounting member, the mounting member is also rotatably mounted on an inner end portion of the connecting member.

In performance of the invention as set out in the last preceding paragraph but five, the end fitting may comprise a tubular sealing collar which surrounds at a distance part at least of the length of the threaded end portion of the connecting member, whereby a seal can be formed by the collar with an outside surface of a conduit mounted on the connecting member, the collar and the connecting member being non-rotatably secured together. To prevent rotation of the connecting member within the collar, a portion of the former can be an interference fit in a bore of the latter. Further resistance to relative rotation could be provided by knurling, or other roughening, of one or other of the engaging surfaces. Alternatively the connecting member may be bonded (e.g. by welding or soldering) to the collar to prevent relative rotation.

As an alternative to the arrangement referred to at commencement of the last preceding paragraph but two, the arrangement may be such that the inner end portion of the mounting member is expanded within the coupling means. Where the fitting comprises a sealing collar, as referred to in the last preceding paragraph, the coupling means can comprise a coupling portion of the collar.

There now follows a detailed description, to be read with reference to the accompanying drawings, of two end fittings and their manufacture, the manufacture of each illustrating the invention in its various aspects by way of example.

In the accompanying drawings:

*Figure 1* is a side view of a first fitting;

*Figure 2* is an end of the fitting;

*Figure 3* is a view in axial section on the line III—III of Figure 2.

*Figure 4* is a view similar to Figure 3 but illustrating use of a mandrel to expand an end portion of a mounting member to secure the member within a collar in assembly of the fitting;

*Figure 5* is a view similar to Figure 3 but illustrating the fitting in use; and

*Figure 6* is a view similar to Figure 3 but showing a further construction of fitting.

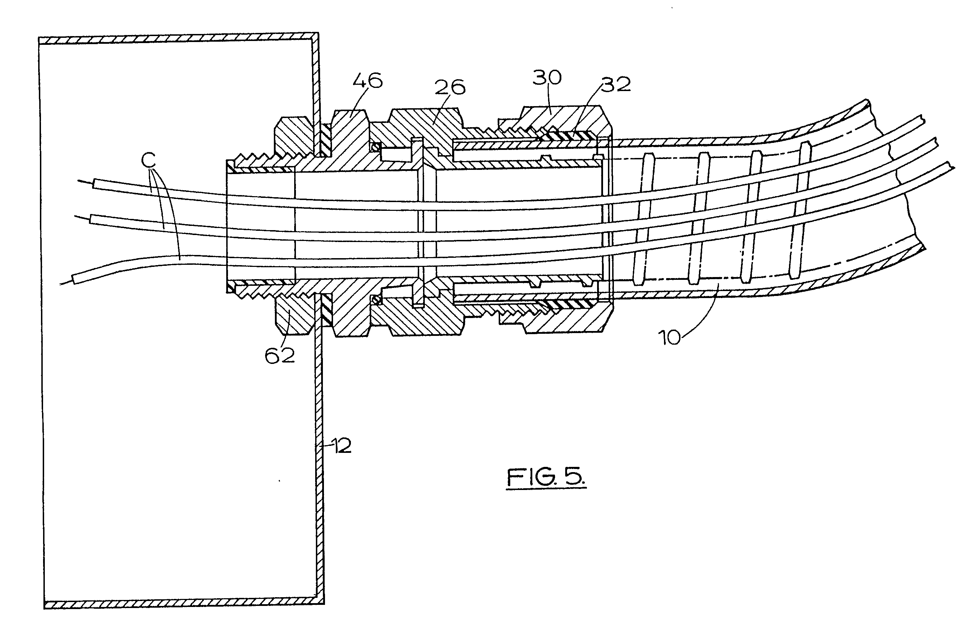

The two end fittings shown in the drawings are each for use in coupling helically-wound flexible metallic conduit 10 to a conduit box 12 (see Figure 5). The conduit 10 may be so-called liquid-tight conduit which has a plastics covering presenting a substantially uncorrugated outer surface.

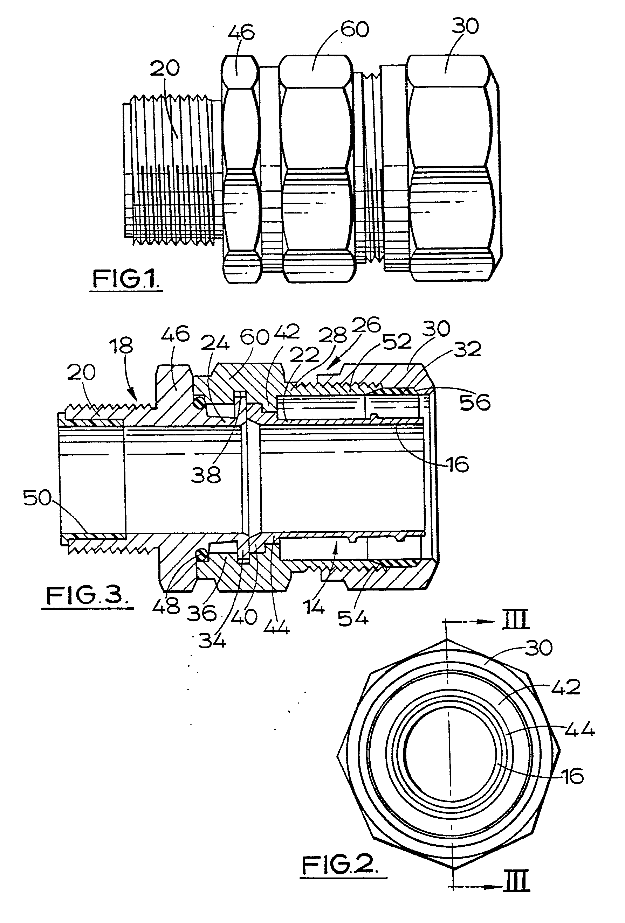

The first fitting (see, especially, Figure 3) comprises three basic coaxially arranged tubular components. First, a connecting member 14 which comprises an externally screw-threaded outer end portion 16 arranged to be secured into the conduit 10. Secondly, a mounting member 18 which comprises an externally screw-threaded outer end portion 20 whereby the fitting can be secured in a receiving aperture of the conduit box 12. The connecting member 14 and the mounting member 18 are arranged end-to-end, with inner end portions 22 and 24, respectively, of them positioned adjacent to one another within the third component of the fitting, which is a sealing collar 26. Coupling means of the fitting comprises a coupling portion 28 of the collar 26, the collar comprising also a nut 30 and a sealing element 32, as will be described hereinafter in more detail. The connecting member 14, the mounting member 18, the coupling portion 28 and the nut 30 are all of brass, though other materials, including other metals (e.g. aluminium or steel), might be used in other embodiments.

As will now be described, the inner end portions 22 and 24 of the connecting member 14 and the mounting member 18 are held captive within the coupling portion 28 of the collar 26 in such a manner as to permit rotation of the mounting member 18 but not the connecting member 14 relative to the collar 26.

The inner end portion 24 of the mounting member 18 comprises a radially outwardly extending end flange 34, a peripheral portion of which is positioned behind a shoulder 36 of the coupling portion 28 of the collar, so to prevent withdrawal of the mounting member from the collar in a direction away from the connecting member 14. The peripheral portion of the flange 34 is retained in a circumferentially-extending groove 38 within the collar 26, the fit of the flange in the groove being sufficiently loose to allow free rotation of the mounting member 18.

The inner end portion 22 of the connecting member 14 similarly comprises a radially outwardly extending end flange 40 which is positioned behind a second shoulder 42 of the collar 26, so to prevent withdrawal of the connecting member from the collar in a direction away from the mounting member 18. To prevent rotation of the connecting member 14 within the coupling portion 28 of the collar 26, a shoulder 44 of the connecting member which is positioned immediately adjacent to the end flange 40, and is of a diameter between those of the flange 40 and the remainder of the member 14 comprising the outer end portion 16, is an interference fit in the bore of the second shoulder 42 of the collar 26.

Positioned between the inner end portion 24 and the outer end portion 20 of the mounting member 18 is a gripping portion 46 of the member 18, whereby the member can be gripped and rotated by means of a spanner. An O-ring seal 48 retained in a radially inwardly facing recess adjacent to an end face of the collar 26 acts against a shoulder of the mounting member 18 immediately adjacent to the gripping portion 46 of the mounting member, so to prevent the ingress of moisture between the collar and the inner end portion 24 of the mounting member.

Positioned in an enlarged portion of the bore of the mounting member 18, leading inwardly from the outer end of the member, is a guard bush 50 of an electrically insulating plastics material. The bush 50 is arranged to protect cables from chafing, where they leave the mounting member, and has a bore substantially equal to that of the remainder of the mounting member and of the connecting member 14.

The sealing collar 26 surrounds at a distance the whole of the length of the outer end portion 16 of the connecting member 14, extending from the coupling portion 28 to beyond the outer end of the connecting member, whereby a seal can be formed by the collar with the outer surface of the conduit 10. The collar is, of course, radially distanced from the connecting member to permit introduction of the conduit 10 into the annular space therebetween. An outer end portion 52 of the coupling portion 28 of the collar is externally screw-threaded to receive the nut 30. The sealing element 32, which is an annular element of a resiliently deformable material, is retained between generally axially opposed surfaces 54 and 56 of the coupling portion 28 and the nut 30, respectively. Both of the opposed surfaces 54 and 56 face in directions having radially inward components, whereby by screwing the nut 30 along the coupling portion 28 the sealing element 32 can be compressed and caused to be deformed radially inwardly against the outer surface of a conduit mounted on the connecting member 14.

The fitting is assembled in the following manner. First, the connecting member 14 is introduced into the coupling portion 28 of the collar (from left to right as seen in Figures 3 and 4), the threaded outer end portion 16 of the connecting member leading and being passed through the collar 26 until the end flange 40 of the connecting member abuts the associated shoulder 42 of the collar. Final positioning of the flange next to the shoulder 42 is achieved with some axial force, the connecting member 14 being driven axially into the collar 26 to achieve the interference fit of the shoulder 44 in the bore of the shoulder 42. The inner end portion 24 of the mounting member 18 is then introduced in a contracted condition (see Figure 4) into the coupling portion 28 and passed along the latter until in substantially correct axial position relative to the collar 26. The inner end portion 24 is then expanded radially by means of a mandrel 58 forced axially through it, from left to right as indicated by an arrow in Figure 4, so causing the end flange 34 of the mounting member to be increased in diameter and become positioned behind the associated shoulder 36 of the collar 26. In its contracted condition, the inner end portion of the mounting member has a tapered bore, and the mandrel 58 has a suitably tapered portion to achieve a smooth expansion.

Use of the fitting is illustrated by Figure 5. To mount the fitting on to the conduit 10, the threaded end portion 16 of the connecting member 14 is screwed into an end portion of the conduit by means of the collar 26, an inner end portion 60 of the coupling portion 28 being provided with flats whereby the collar can be gripped and rotated by means of a spanner. The conduit so enters the annular space between the collar 26 and the connecting member 14. The nut 30 of the collar is then rotated by means of a spanner (the nut being provided with suitable flats) further on to the coupling portion 28 to cause compression of the sealing element 32. The element 32 becomes compressed and urged radially inwardly against the outer surface of the conduit to form a seal. The fitting can then be coupled up to the conduit box 12 by securing the threaded end portion 20 of the mounting member 18 in the receiving aperture of the box by means of a nut 62. A spanner may be applied across flats of the gripping portion 46 of the mounting member. The mounting member being free to rotate relative to the collar 26 and the connecting member 14 can assist in securing the fitting to the conduit box. Cables C can be passed through the conduit 10, and the fitting, into the conduit box 12.

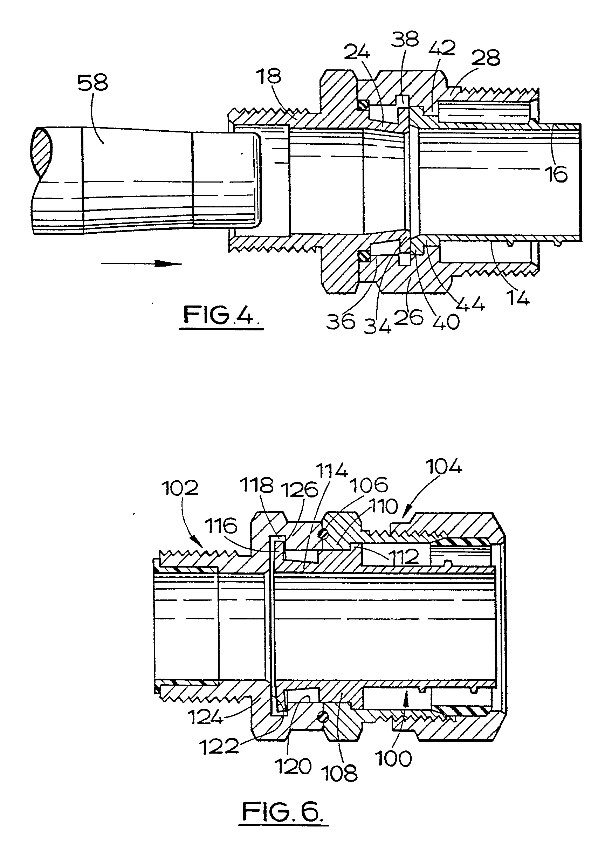

An alternative construction of end fitting is shown in Figure 6. This fitting is in many ways very similar to the first fitting, and will only be described herein insofar as it differs significantly. With reference to Figure 6, the alternative fitting comprises a connecting member 100, a mounting member 102 and a collar 104, which correspond with the parts so-named of the first fitting. However, although the mounting member 102 is rotatably secured relative to the connecting member 100 and the collar 104, which are themselves non-rotatably secured together, the coupling arrangement of the components is different, as will now be described.

The mounting member 102 and the collar 104 abut one another end-to-end, with an "O"-ring 106 arranged to seal between opposed end faces. The connecting member 100 is non-rotatably secured within the collar 104 by means of an interference fit of a cylindrical head portion 108 of the connecting member in a bore defined by a shoulder 110 of the collar. A flange 112 of the connecting member projects radially outwardly beyond the head portion 108 to abut an axially facing annular surface of the shoulder 110 of the collar to limit passage of the connecting member through the collar in assembly.

Formed integrally with the connecting member 100 is tubular coupling means 114 of the fitting, the coupling means being in the form of an inner end extension from the head portion 108 of the connecting member. The coupling means comprises a radially outwardly extending end flange 116 of which a peripheral portion is engaged in a groove 118 behind a shoulder within the mounting member 102. By engagement of the flange 116 in the groove 118 the mounting member 102 is held captive on the connecting member 100, the mounting member being rotatable on the flange and further supported in rotation by means of an innermost end portion of the head portion 108 of the connecting member which is located in an innermost end portion of a bore 120 of the mounting member (shown in Figure 6).

Assembly of the fitting is achieved by means of an expansion mandrel in a similar manner to that employed in assembly of the first fitting hereinbefore described, except that for this alternative fitting it is the coupling means 114 associated with the connecting member 100 which is expanded, rather than the mounting member which is expanded. The collar 104 is first of all driven axially on to the head portion 108 of the connecting member, achieving the required interference fit between the components, until the shoulder 110 of the collar abuts the flange 112 of the connecting member. The sub-assembly of the connecting member 100 and collar 104 is then assembled with the mounting member 102, the innermost end portion of the head portion 108 of the connecting member sliding within the bore 120 of the mounting member until the end flange 116 of the coupling means 114 abuts an end face 122 of a reduced diameter portion 124 of the mounting member 102. The coupling means 114 is so introduced into the mounting member in a contracted condition and an expansion mandrel is next driven through the fitting (from right to left as seen in Figure 6) to expand the coupling means 114 and, in particular, to increase the diameter of the end flange 116 thereof in order that the flange enters the groove 118 of the mounting member 102.

In an alternative arrangement the head portion 108 of the connecting member and the shoulder 110 of the collar 104 may each have a small degree of taper (not more than about 7°). Also the seal 106 may be moved inside to act between the coupling means 114 and the mounting member 102 within the bore 120.

As shown in Figure 6, upon expansion of the coupling means 114 the end flange 116 thereof becomes turned slightly from a plane normal to the fitting axis, with the consequence that a peripheral edge 126 of the flange makes substantially line contact with a wall of the groove 118 in retaining the rotatable mounting member 102. A similar arrangement could, of course, be employed with the first fitting.

It will be appreciated that whilst assembly of both the fittings has been described as two stage processes, assembly could be achieved simply by a single pass of the mandrel. That is to say, in assembling the first fitting the axial force applied by the mandrel could be used to drive the connection member 14 into its interference fit with the collar 26, or could even be used to expand a contracted portion of the connecting member to achieve an interference fit. Similarly, in assembly of the alternative fitting (Figure 6) the interference fit and the expansion of the coupling means 114 could both be achieved by a single pass of the mandrel.

The mounting member 102 of the alternative fitting may be formed as an elbow, rather than a straight fitting as shown in Figure 6. In that case, the use of an expansion mandrel for assembly of the fitting becomes even more advantageous over traditional spinning techniques.

## Claims

1. A method of manufacturing an end fitting comprising a tubular connecting member (14; 100) comprising an externally screw-threaded outer end portion (16) arranged to be screwed into an end portion of a flexible conduit (10), and a tubular mounting member (18; 102) comprising an outer end portion (20) whereby the fitting can be secured to a support (12), there being associated with said connecting member tubular coupling means (28; 114) whereby said mounting member is held captive relative to said connecting member in such a manner as to permit relative rotation of said mounting member relative to said connecting member and said coupling means, characterised in that it comprises introducing in a contracted condition one of said coupling means (114) and an inner end portion (24) of said mounting member (18) into the other of said coupling means (28) and said mounting member (102) and forcing a mandrel (58) through the radially inner component (24; 114) of the assembly to cause radial expansion thereof from the contracted condition to a condition in which said mounting member is held captive.

2. A method according to claim 1 characterised in that the radial expansion by the mandrel results in a flange (34; 116) of the radially inner component (24; 114) becoming positioned behind a shoulder (36) of the radially outer component (28; 102) to prevent withdrawal of the inner component.

3. A method according to claim 2 characterised in that after the expansion by the mandrel a peripheral edge (126) of the flange is arranged to make substantially line contact with the shoulder.

4. A method according to any one of claims 1 to 3 characterised in that said coupling means (114) is expanded within said mounting member (102).

5. A method according to claim 4 characterised in that said coupling means (114) is expanded within an inner end portion of said mounting member (102).

6. A method according to either of claims 4 and 5 characterised in that the mounting member (102) is also rotatably mounted on an inner end portion (108) of the connecting member.

7. A method according to any one of claims 4, 5 and 6 characterised in that the fitting comprises also a tubular collar (104) which surrounds at a distance part at least of the length of the threaded end portion of the connecting member (100), whereby a seal can be formed by the collar with an outside surface of a conduit mounted on the connecting member, the collar and the connecting member being non-rotatably secured together.

8. A method according to claim 7 characterised in that in assembling the fitting the connecting member (100) is driven axially into the collar (104) to achieve an interference fit whereby the two become secured together.

9. A method according to any one of claims 1, 2 and 3 characterised in that said inner end portion (24) of said mounting member (18) is expanded within said coupling means (28).

10. A method according to claim 9 characterised in that the coupling means (28) comprises a coupling portion of a tubular sealing collar (26) which surrounds at a distance part at least of the length of said threaded end portion (16) of said connecting member (14) whereby a seal can be formed by said collar with an outside surface of a conduit (10) mounted on said connecting member, the collar and the connecting member being non-rotatably secured together.

**Patentansprüche**

1. Verfahren zur Herstellung eines Endstücks mit einem rohrförmigen Verbindungsglied (14; 100), welches einen mit Außengewinde versehenen äußeren Endteil (16), der in einen Endteil einer flexiblen Leitung (10) einschraubbar ist, sowie ein rohrförmiges Befestigungsglied (18; 102) umfaßt, welches einen äußeren Endteil (20) aufweist, mittels welchem das Endstück an einem Träger (12) befestigbar ist, und mit einem dem Verbindungsglied zugeordneten rohrförmigen Kupplungsglied (28; 114), mittels welchem das Befestigungsglied derart an dem Verbindungsglied festgehalten wird, daß eine Drehung des Befestigungsgliedes gegenüber dem Verbindungsglied und dem Kupplungsglied möglich ist, dadurch gekennzeichnet, daß das Kupplungsglied (114) oder der innere Endteil (24) des Befestigungsglieds (18) in durchmesserreduziertem Zustand in das Befestigungsglied (28) bzw. das Kupplungsglied (102) eingeführt werden und daß durch den radial inneren Teil (24; 114) der Anordnung ein Dorn (58) hindurchgetrieben wird, um ihn aus dem durchmesserreduzierten Zustand radial in einen Zustand aufzuweiten, in welchem das Befestigungsglied festgehalten wird.

2. Verfahren nach Anspruch 1, dadurch gekennzeichnet, daß die radiale Aufweitung durch den Dorn dazu führt, daß ein Flansch (34; 116) der radial inneren Komponente (24; 114) hinter eine Schulter (36) der radial äußeren Komponente (28; 102) gelangt, um das Herausziehen der inneren Komponente zu unterbinden.

3. Verfahren nach Anspruch 2, dadurch gekennzeichnet, daß nach der Aufweitung durch den Dorn eine Umfangskante (126) des Flansches in einen im wesentlichen linienförmigen Kontakt mit der Schulter kommt.

4. Verfahren nach einem der Ansprüche 1 bis 3, dadurch gekenn-zeichnet, daß das Kupplungsglied (114) innerhalb des Befestigungsgliedes (102) aufgeweitet wird.

5. Verfahren nach Anspruch 4, dadurch gekennzeichnet, daß das Kupplungsglied (114) innerhalb eines inneren Endteils des Befestigungsgliedes (102) aufgeweitet wird.

6. Verfahren nach Anspruch 4 oder 5, dadurch gekennzeichnet, daß das Befestigungsglied (102) auch drehbar auf einem inneren Endteil (108) des Verbindungsgliedes angebracht ist.

7. Verfahren nach einem der Ansprüche 4, 5 und 6, dadurch gekennzeichnet, daß das Endstück auch einen rohrförmigen Dichtungskragen (104) umfaßt, der mit einem Abstand zumindest einen Teil der Länge des mit Gewinde versehenen Teils des Verbindungsgliedes (100) umgibt, wodurch durch den Kragen mit einer äußeren Oberfläche einer an dem Verbindungsglied befestigten Leitung eine Dichtung gebildet werden kann, wobei der Kragen und das Verbindungsglied undrehbar miteinander verbunden sind.

8. Verfahren nach Anspruch 7, dadurch gekennzeichnet, daß beim Zusammenbau des Endstücks das Verbindungsglied (100) axial in den Kragen (104) eintreibbar ist, um einen Festsitz zu erzielen, durch welchen die beiden Teile aneinander festlegbar sind.

9. Verfahren nach einem der Ansprüche 1, 2 oder 3, dadurch gekennzeichnet, daß der innere Endteil (24) des Befestigungsgliedes (18) innerhalb des Kupplungsgliedes (28) aufgeweitet wird.

10. Verfahren nach Anspruch 9, dadurch gekennzeichnet, daß das Kupplungsglied (28) einen Kupplungsteil eines rohrförmigen Dichtkragens (26) umfaßt, der mit Abstand zumindest einen Teil der Länge des mit Gewinde versehenen Endteils (16) des Verbindungsgliedes (14) umgibt, wobei durch den Kragen eine Dichtung mit einer äußeren Oberfläche einer an dem Verbindungsglied befestigten Leitung (10) gebildet werden kann und der Kragen und das Verbindungsglied undrehbar miteinander verbunden sind.

**Revendications**

1. Procédé pour fabriquer un raccord fileté d'extrémité comprenant un organe de raccordement tubulaire (14; 100) comprenant une partie d'extrémité extérieure (16) filetée extérieurement et destinée à être vissée dans une partie d'extrémité d'un tuyau flexible (10), et un organe de montage tubulaire (18; 102) comprenant une partie d'extrémité extérieure (20), qui permet de fixer le raccord fileté à un support (12), et dans lequel audit organe de raccordement se trouvent associés des moyens d'accouplement tubulaires (28; 114) grâce auquel ledit organe de montage est maintenu à l'état captif par rapport audit organe de liaison d'une manière permettant une rotation relative dudit organe de montage par rapport audit organe de raccordement et auxdits moyens d'accouplement, caractérisé en ce qu'il consiste à introduire, dans un état contracté, l'un desdits moyens d'accouplement (114) et une partie d'extrémité intérieure (24) dudit organe de montage (18) dans l'autre desdits moyens d'accouplement (28) et dans ledit organe de montage (102) et à insérer à force un mandrin (58) à l'intérieur du composant (24; 114), intérieur du point de vue radial, de l'ensemble de manière à provoquer une dilatation radiale de ce composant depuis l'état contracté jusque dans un état dans lequel ledit organe de montage est retenu captif.

2. Procédé selon la revendication 1, caractérisé en ce que la dilatation radiale produite par le mandrin entraîne le positionnement d'une bride (34; 116) du composant (24; 114) intérieur du point de vue radial, derrière un épaulement (36) du composant (28; 102), extérieur du point de vue radial, de manière à empêcher un retrait du composant intérieur.

3. Procédé selon la revendication 2, caractérisé en ce qu'après la dilatation produite par le mandrin, un bord périphérique (126) de la bride se trouve dans une position dans laquelle il établit un contact essentiellement linéaire avec l'épaulement.

4. Procédé selon l'une quelconque des revendications 1 à 3, caractérisé en ce que lesdits moyens d'accouplement (114) sont dilatés à l'intérieur dudit organe de montage (102).

5. Procédé selon la revendication 4, caractérisé en ce que lesdits moyens d'accouplement (114) sont dilatés à l'intérieur d'une partie d'extrémité intérieure dudit organe de montage (102).

6. Procédé selon l'une quelconque des revendications 4 et 5, caractérisé en ce que l'organe de montage (102) est également monté rotatif sur une partie d'extrémité intérieure (108) de l'organe de raccordement.

7. Procédé selon l'une quelconque des revendications 4, 5 et 6, caractérisé en ce que le raccord fileté comporte également un manchon d'étanchéité tubulaire (104) qui entoure, à une certaine distance, la partie d'extrémité filetée de l'organe de raccordement (100), sur au moins une partie de sa longueur, ce qui a pour effet que le manchon peut établir une étanchéité avec une surface extérieure d'un tuyau monté sur l'organe de raccordement, le manchon et l'organe de raccordement étant fixés l'un à l'autre avec blocage en rotation.

8. procédé selon la revendication 7, caractérisé en ce que, lors de l'assemblage du raccord fileté, on introduit axialement l'organe de raccordement (100) dans le manchon (104) de manière à obtenir un ajustement serré, ce qui entraîne la fixation de ces deux éléments l'un à l'autre.

9. Procédé selon l'une quelconque des revendications 1, 2 et 3, caractérisé en ce que ladite partie d'extrémité intérieure (24) dudit organe de montage (18) est dilatée à l'intérieur desdits moyens d'accouplement (28).

10. Procédé selon la revendication 9, caractérisé en ce que les moyens d'accouplement (28) comprennent une partie d'accouplement d'un manchon d'étanchéité tubulaire (26) qui entoure à distance ladite partie d'extrémité filetée (16) dudit organe de raccordement (14), sur au moins une partie de sa longueur, ce qui a pour effet que ledit manchon établit une étanchéité avec une surface extérieure d'un tuyau (10) monté sur ledit organe de raccordement, le manchon et l'organe de raccordement étant fixés l'un à l'autre avec blocage en rotation.

FIG.1.

FIG.3.

FIG.2.

FIG. 5.

2

FIG.4.

FIG.6.